Europäisches Patentamt

European Patent Office

Office européen des brevets

(11) Publication number: 0 483 993 A2

# EUROPEAN PATENT APPLICATION

(21) Application number: 91309438.9

(22) Date of filing: 15.10.91

(51) Int. Cl.5: G01C 19/72

(30) Priority: 29.10.90 US 604265

(43) Date of publication of application:
06.05.92 Bulletin 92/19

(84) Designated Contracting States:
DE FR GB IT SE

(71) Applicant: HUGHES AIRCRAFT COMPANY
7200 Hughes Terrace
Los Angeles, CA 90045-0066(US)

(72) Inventor: Vali, Victor
26035 Moulton Parkway

Laguna Hills, California 92653(US)
Inventor: Brownrigg, Patrick C.
3775 Flora Vista Avenue No. 204
Santa Clara, California 95051(US)
Inventor: Chang, David B.
14212 Livingston
Tustin, California 92680(US)

(74) Representative: Colgan, Stephen James et al
CARPMAELS & RANSFORD 43 Bloomsbury
Square
London WC1A 2RA(GB)

(54) Integrated optics gyroscope sensor.

(57) An integrated optical gyro sensor comprising a Sagnac interferometer, having a light source, a plurality of optical waveguides and an optical coupling arrangement integrated onto a substrate. The substrate has multiple light waveguides and detectors integrated therein. The primary waveguide has a roughly spiral shape with its respective ends disposed approximately 90 degrees to each other. The optical coupling arrangement comprises four beamsplitters and a reflector, which couple light signals to the primary waveguide and to two light detectors. The relative phase shift of the counterpropagating light signals in the primary waveguide is detected. The phase shift measurement is proportional to the physical inertial rotation of the sensor.

FIG. 1.

## BACKGROUND

The present invention relates to optical gyroscope devices, and more particularly, to integrated optical gyroscope devices based on the Sagnac effect.

Inertial navigation systems in aircraft and spacecraft require measurement of rotation. Mechanical gyroscopes represent one example of prior art in the field. Such mechanical gyroscopes depend on high angular momentum generated by a spinning wheel or ball for the measurement of rotation. Mechanical gyros have several disadvantages, including relatively high manufacturing cost and mechanical wear. However, optical gyros have the advantage of low cost, no moving parts, no warm up time and no gravitational-sensitivity.

Prior art exists for both active and passive optical rotation sensors that are based on the well-know Sagnac effect. Optical gyros based on the Sagnac effect use two optical paths having an optical path length difference that produces a phase shift in the light signals propagating in opposite directions in single mode spiral or ring waveguide when the device is rotating. The amount of the phase shift is directly proportional to the inertial rotation of the waveguide.

Both high and low accuracy optical senors exist in a number of discrete embodiments. Aircraft and spacecraft inertial guidance systems use conventional optical gyros having sensitivities in the .01 - 1.0 degrees/hour range. However, conventional optical gyros have not been employed for yaw control in anti-skid braking systems in land vehicles, such as automobiles. Also, conventional optical gyros have much greater sensitivities than the 1 degree per second sensitivity that is required to measure vehicle wheel rotation, for use as a speedometer sensor, for example. In order for such devices to be practical, they must have a very low manufacturing cost, requiring integrated optic techniques adaptable to mass production. The prior art sensors fail to provide the necessary structure for a low cost mass producible device.

Accordingly it is a feature of the present invention to provide a low cost, mass-producible rotation sensor employing an optical Sagnac interferometer and using integrated optics produced by photolithographic techniques. Another feature of the present invention is a sensor that measures the yaw rotation of an automobile or other land vehicle during controlled or uncontrolled skid conditions. Another feature of the present invention is an optically integrated gyro readout device that may be used with various types of Sagnac interferometer gyros. Another feature of the present invention is a rotation sensor for measuring wheel rotation of a land vehicle, as a part of the vehicle's speedometer measurement system. A still further feature of the present invention is to combine a Sagnac gyro with integrated optic technology to form a small, rugged, reliable and low cost rotation sensor or gyro.

## SUMMARY OF THE INVENTION

In accordance with these and other objectives and features of the present invention, there is provided an integrated optical gyro sensor that may be employed as a rotation sensor and a yaw sensor in an anti-skid braking system, for example. The integrated optical gyro sensor comprises a substrate having a light source, such as a laser diode, integrated therein. A first generally spiral shaped waveguide is disposed in the substrate having its opposite ends disposed at approximately 90 degrees with respect to one another. First and second light detectors are integrated in the substrate that detect light emitted by the light source. Second and third waveguides are disposed in the substrate that couple light signals to the first and second detectors. A detection circuit is coupled to the first and second detectors for measuring the relative phase shift between the light signals detected thereby due to rotation of the sensor.

An optical readout arrangement is integrated in the substrate that is adapted to couple light between the various waveguides of the sensor. The optical readout arrangement includes four beamsplitters and one reflector integrated in the substrate. Each of the beamsplitters and the reflector comprise relatively thin reflecting and/or transmitting slots etched in the substrate.

The beamsplitters are disposed such that light signals are caused to counterpropagate within the first waveguide and are reflected into the second and third waveguides. The reflector is disposed to cause the light signals reflected into the third waveguide to be reflected along the waveguide to the second detector. The four beamsplitters cause light signals propagating in both directions in the first waveguide to be coupled into the second and third waveguides and hence to the first and second detectors. The arrangement of four beamsplitters generates two counter-propagating light waves in the first waveguide and provides a means for coupling the intensity and phase of the counter-propagating light waves to the detectors.

The present invention solves the conventional optical gyro deficiencies by using optically integrated planar or channel waveguides to realize a mass producible optical rotation sensor. Integrated optics allows the incorporation of many single mode optical devices and waveguide configurations in a single substrate. The sensor of the present invention has a large bandwidth, experiences no electromagnetic interference problems, has a small geometry, and may be manufactured in large quantities at relatively low cost.

## BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:

Fig. 1 is a schematic drawing of the integrated optical gyro sensor showing the important optical and electrical circuit elements.

Fig. 2 is a schematic drawing representing an integrated optical readout device of the integrated optical gyro sensor.

## DETAILED DESCRIPTION

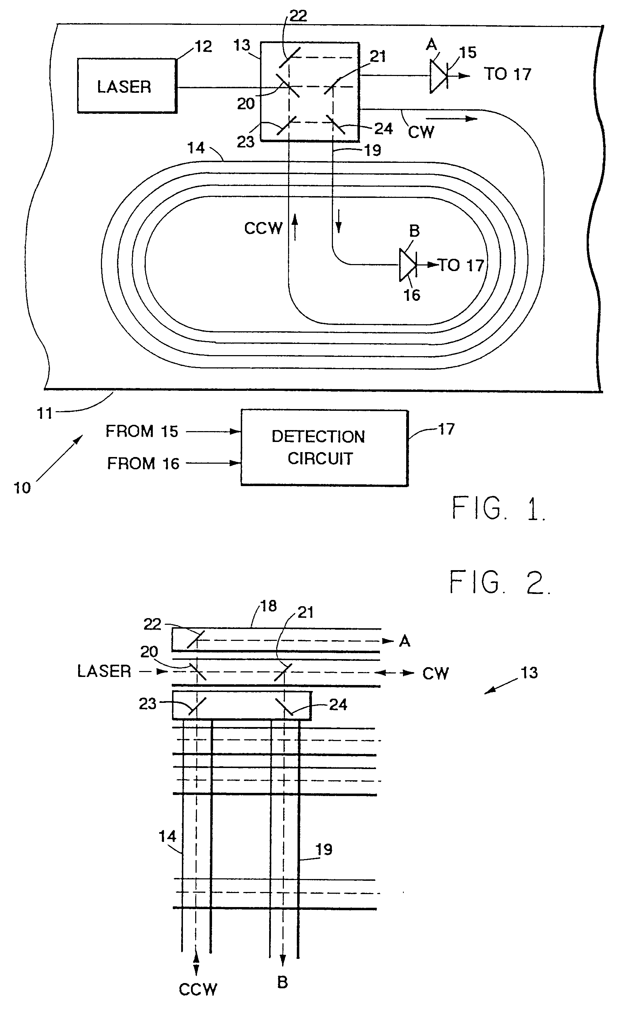

Fig. 1 shows an embodiment of an integrated optical Sagnac interferometer gyro sensor 10 integrated in a substrate 11. Several types of substrate materials may be used that are suitable for optical integrated circuits, such as silicon (Si) and lithium niobate (LiNbO$_3$), for example. A plurality of optical waveguides comprising first, second and third 14, 18, 19 are fabricated in the substrate 11 by well-known deposition and etching processes and techniques. An optical source 12, such as a semiconductor laser or laser array, is mounted onto or integrated in the substrate 11. The optical source 12 is adapted to emit a narrow beam of coherent light along the surface of the substrate 11. The light beam enters an optical coupling arrangement 13 disposed in the substrate 11, comprised of an optical reflector 22 and first, second, third and fourth beamsplitters 20, 21, 23, 24, shown in more detail in Fig. 2. The coupling arrangement 13, described in detail below, is adapted to split the light beam into several beams that travel in the optical waveguides 14, 18, 19 integrated in the substrate 11.

The first waveguide 14, has a roughly spiral-like shape that may have one or more turns. The first waveguide 14 interfaces to the coupling arrangement 13 at two points, as shown in Fig. 1. The first waveguide 14 has a first end 5, that is employed as an input for a clockwise (CW) light path, that is arranged such that light signals from the light source 12 directly enter through the first end. The first waveguide 14 has a second end 6, that is employed as an input for a counter-clockwise (CCW) light path, and is oriented at approximately 90 degrees with respect to the first end. In some cases, the spiral shape of the first waveguide may comprise a single loop with the first and second ends disposed at 90 degrees. The first and second ends of the first waveguide 14 interface to the coupling arrangement 13, so that light signals may be coupled out of the first waveguide 14 and processed as described below.

A second waveguide 18 is coupled between a first optical light detector 15 and the coupling arrangement 13, while a third waveguide 19 is coupled between a second optical light detector 16 and the coupling arrangement. Electrical signals from the first and second detectors 15, 16 are coupled into a detection circuit 17 by the respective fourth and fifth waveguides 28, 29. The detectors 15, 16 are preferably integrated in the substrate 11. The detectors 15, 16 may be comprised of PIN photodiode light detectors, for example. Output signals provided by the detectors 15, 16 are coupled to a detector circuit 17. The detector circuit is adapted to measure the relative phase difference between light signals detected by the detectors 15, 16.

With reference to Fig. 2 it shows the coupling arrangement 13 in more detail as viewed from above, having up/down and left/right directions the same as shown in Fig. 1. The coupling arrangement 13 is integrated in the substrate 11 and is adapted to couple light signals between the various waveguides 14, 18, 19 and the detectors 15, 16 of the sensor 10. The coupling arrangement 13 includes the four beamsplitters 20, 21, 23, 24 and the reflector 22 integrated in the substrate 11. Each of the beamsplitters 20, 21, 23, 24 and the reflector 22 comprise relatively thin reflecting and/or transmitting slots etched in the substrate 11. Each of the beamsplitters 20, 21, 23, 24 may be 50/50 beamsplitters, for example.

More particularly, the first beamsplitter 20 is disposed along the first waveguide such that light is transmitted and reflected into respective first and second ends of the first waveguide 14, so that the light signals counter-propagate therein. The second beamsplitter 21 is disposed such that counter-clockwise propagating light signals are reflected into the third waveguide 19 and transmitted therethrough and reflected from the first beamsplitter into the second waveguide 18. In a similar manner, the third beamsplitter 23 is disposed such that light that is reflected from the first beamsplitter 20 is transmitted into the second end of the first waveguide 14, and light that traverses the clockwise path through the first waveguide is reflected toward the third waveguide 19. The fourth beamsplitter 24 is disposed to transmit counter-clockwise propagating light signals reflected by the second beamsplitter 21 into the third waveguide 19 and also reflect clockwise propagating light signals reflected by the third beamsplitter 23 into the third waveguide 19 toward the second light detector 16.

The reflector 22 is disposed such that CCW light reflected by, and CW light transmitted by, the first beamsplitter 20 is reflected along the second waveguide 18 toward the first light detector 15.

The beamsplitters 20, 21, 23, 24 and the reflector 22 are formed in the substrate 11 by means of conventional etching or diffusion processes that form very thin slots. In the case of a lithium niobate substrate 11, titanium (Ti) material is deposited into the substrate 11, to a depth of on order of 5 $\mu$m deep. To make a 50/50 beamsplitter, an ion beam is used to etch a very thin slot (approximately 200 Angstroms) across the Ti doped substrate 11 at about a 45 degree angle, the critical angle for total internal reflection. The thin slot transmits the 50 percent of the evanescent light wave and reflects 50 percent of the light. Fabrication of the reflector 22 in the substrate 11 is accomplished by means of a similar technique, but with differing slot dimensions and angles. Many different fabrication techniques exist for producing integrated optical components employed in the sensor 10 of the present invention.

In operation, the light signals from the light source 12 enter the coupling arrangement 13 and impinge on the first beamsplitter 20, which couples the light signals to the second beamsplitter 21 to the right and hence into the first end 5 of the first waveguide 14 along the clockwise path (CW), and through the third beamsplitter 23 below and into the second end 6 of the first waveguide 14 along the counter-clockwise path (CCW). The reflector 22 couples counter-clockwise propagating light signals reflected from the first beamsplitter 20 along the second waveguide 18 to the first detector 15. The second beamsplitter 21 couples a portion of the counter-clockwise propagating light signals through the fourth beamsplitter 24 to the second detector 16. The third beamsplitter 23 transmits clockwise propagating light signals through the first beamsplitter 20 to the reflector 22 and hence along the second waveguide 18 to the first detector 15. The forth beamsplitter 24 couples clockwise light reflected from the third beamsplitter 23 along the third waveguide 19 to the second detector 16.

It is to be noted that the reflector 22 is not necessarily required for an operative sensor 10. In particular, if the first detector 15 and second waveguide 18 are oriented along the optical path defined by the second end 6 of the first waveguide 14, namely, extending upward from the second waveguide 14 as shown in Fig. 2, then the reflector 22 would be unnecessary.

The embodiment of Fig. 1 provides for a passive Sagnac interferometer rotation sensor 10 integrated in a single electro-optical substrate 11. The first waveguide 14 forms a single mode ring waveguide of the passive Sagnac interferometer.

The detector circuit 17 measures the optical phase shift between signals counter-propagating in the first waveguide 14, in an amount proportional to a physical rotation of the first waveguide 14 about an axis perpendicular to the plane thereof. Rotation of the sensor 10 causes a nonreciprocal phase difference of $\Delta\phi = 4\pi LR\Omega/\lambda c$ [Equation (1)], to be introduced between the counter-propagating light signals in the first waveguide 14. In Equation 1, L is the length of the first waveguide 14 including the number of turns, R is the diameter of the spiral, LR is the total area enclosed by first waveguide 14, $\lambda$ and c are the free space light wavelength and velocity, respectively, and $\Omega$ is the rotation rate. The counter-propagating light signals are combined by the coupling arrangement 13 and are detected by the detection circuit 17, and the the phase shift produces a rotation dependent intensity of $I = 1/2I_o(1 + \cos 2\phi)$.

The sensitivity of this gyro sensor 10 is very small, so to maximize it, a phase modulator may be disposed in the first waveguide 14 to introduce an effective nonreciprocal $\pi/2$ phase shift between the counter-propagating light signals. The phase shift then changes linearly for small rotation rates, and the sensitivity of the gyro sensor 10 is at its maximum. Instead of the phase shift, the corresponding optical path difference may be measured.

For ideal behavior, the interferometer gyro sensor 10 presumes perfect reciprocity, having identical length clockwise and counter-clockwise optical paths. In real systems, several noise phenomena may generate a nonreciprocal phase shift. These include backscattering, waveguide birefringence, nonlinear refractive index effects, the Faraday effect caused by magnetic fields, and nonlinear time dependent reciprocal effects caused by temperature variations. These phenomena may be reduced by employing several techniques. A light source 12 having a short coherence time reduces backscattering. A polarizer disposed in the optical path between the light source and the coupling arrangement 13 reduces waveguide birefringence. A broadband light source 12, such as a super-luminescent laser diode, reduces nonlinear index changes in the first waveguide 14. Magnetic shielding disposed around the sensor 10 eliminates problems caused by the Faraday effect. Isolating the first waveguide 14 and using special winding techniques reduces the time-dependent nonreciprocity caused by temperature variations.

For use in yaw control for land vehicles, for example, the sensor 10 measures rotations on the order of 1 degree/second accuracy. Solving for the rotation rate in Equation (1) and using realistic values for the parameters, the value of the expected rotation rate may be calculated. For an integrated optical chip, an attenuation factor of 0.2 dB/cm is typical, a phase shift of $10^{-5}$ radians is expected, L = 100 cm, R = 2.5 cm, wavelength = 1.3 $\mu$m, and c = 3($10^{10}$) cm/sec. The rotation rate calculation indicates a minimum detectable rotation rate of 0.012 rad./sec. (or approximately 1 degree per second). The phase shift used in the above calculation is quite conservative, so the accuracy of the sensor 10 may be increased by an order of magnitude.

The upper rotation rate limit for this type of gyro sensor 10 occurs at a phase shift of about 1 radian, and it becomes too nonlinear for relatively high rotation rates, on the order of 1200 radians/second or 190 revolutions/second. Thus, the sensor 10 of the present invention may be employed as a rotation sensor for an automobile, truck, or other land vehicle. Such a sensor 10 is capable of measuring speeds in the range of 60 mi./hr., which corresponds to about 17 revolutions/second for a 70 cm diameter wheel.

Thus there has been described a new and improved integrated optical Sagnac interferometer gyro sensor. Its is to be understood that the above-described embodiment is merely illustrative of some of the many specific embodiments which represent applications of the principles of the present invention. Clearly, numerous and other arrangements can readily be devised by those skilled in the art without departing from the scope of the invention.

**Claims**

1. An integrated optical gyro sensor comprising:

a substrate;

a light source integrated in the substrate to provide light;

a first waveguide that is generally spiral shaped disposed in the substrate and having a first end that is optically coupled to the light source to receive light provided by the light source, and having a second end oriented at approximately ninety degrees with respect to the first end, and wherein the waveguide is adapted to transmit light therethrough;

first and second light detectors integrated in the substrate to detect light incident thereupon;

a second waveguide disposed in the substrate and oriented at substantially parallel to the first end of the first waveguide, and having a first end that is adapted to receive light transmitted through the first waveguide, and having a second end that is optically coupled to the first light detector, the second waveguide adapted to transmit light therethrough to the first light detector;

a third waveguide disposed in the substrate and oriented at substantially parallel to the second end of the first waveguide, and having a first end that is adapted to receive light transmitted through the first waveguide, and having a second end that is optically coupled to the second light detector, the third waveguide adapted to transmit light therethrough to the second light detector;

an optical readout arrangement integrated into the substrate that comprises:

(1) a first beamsplitter comprising a thin reflecting and transmitting slot etched in the substrate adjacent the first end of the first waveguide and disposed within the first waveguide that is oriented such that applied light is coupled into the first waveguide by way of its first and second ends such that light counterpropagates within the first waveguide;

(2) a second beamsplitter comprising a thin reflecting and transmitting slot etched in the substrate adjacent the first beamsplitter and disposed adjacent the first waveguide that is oriented such that light coupled along the first waveguide toward the first end thereof is reflected into the third waveguide at its first end, and such that the light is transmitted further along the first waveguide and reflected from the first beamsplitter into the second waveguide at its first end;

(3) a reflector comprising a thin reflecting and transmitting slot etched in the substrate adjacent the first beamsplitter and disposed within the second waveguide and oriented such that light coupled by way of the first beamsplitter into the second waveguide is coupled along the second waveguide to the first detector;

(4) a third beamsplitter comprising a thin reflecting and transmitting slot etched in the substrate adjacent the first beamsplitter and disposed adjacent the first waveguide near its second end and oriented such that light transmitted along the first waveguide toward the second end thereof is transmitted therethrough and coupled to the second waveguide by way of the first beamsplitter and reflector, and the light is reflected therefrom into the third waveguide at its first end;

(5) a fourth beamsplitter comprising a thin reflecting and transmitting slot etched in the substrate adjacent the third beamsplitter and disposed adjacent the third waveguide near its first end and oriented such that light coupled by way of the third beamsplitter into the third waveguide is coupled along the third waveguide to the second detector, and such that light reflected by the second beamsplitter into the third waveguide is transmitted by the fourth beamsplitter to the second detector wherein the arrangement of the four beamsplitters result in two counter propagating light waves in the first waveguide and provides means for reading out the intensity and phase of the counter propagating light waves; and

detection means coupled to the first and second detectors for measuring the relative phase shift between the light detected by the first and second detectors due to rotation of the sensor.

2. The integrated optical gyro sensor of claim 1, in which the sensor is comprised of titanium diffused onto a lithium niobate substrate.

3. The integrated optical gyro sensor of claim 1, in which the sensor comprises a glass on silicon structure.

4. The integrated optical gyro sensor of claim 1, in which the first and second detectors comprise PIN photodiode detectors integrated onto the substrate.

5. The integrated optical gyro sensor of claim 1, in which the light source comprises a laser diode integrated onto the substrate.

6. A method for measuring the yaw rotation of a land vehicle comprising use of an integrated optical gyro sensor for measuring the yaw rotation as a result of a skidding action of the vehicle.

7. A method for measuring the speed of a land vehicle comprising use of an integrated optical gyro sensor for measuring the rotation of a wheel of the vehicle.

8. An integrated optical gyro sensor comprising:
    a substrate;
    a laser light source integrated in the substrate that is adapted to provide laser light;
    a first lithium niobate single mode waveguide disposed in the substrate and having a first end that is optically coupled to the laser to receive laser light provided by the laser light source, and having a second end oriented at approximately ninety degrees with respect to the first and, and wherein the waveguide is adapted to transmit the laser light therethrough;
    first and second light detectors integrated in the substrate to detect laser light incident thereupon;
    a second lithium niobate single mode waveguide disposed in the substrate and oriented at substantially parallel to the first end of the first waveguide, and having a first end that is adapted to receive laser light transmitted through the first waveguide, and having a second end that is optically coupled to the first laser light detector, the second waveguide adapted to transmit laser light therethrough to the first laser light detector;
    a third lithium niobate single mode waveguide disposed in the substrate and oriented at substantially parallel to the second end of the first waveguide, and having a first end that is adapted to receive laser light transmitted through the first waveguide, and having a second end that is optically coupled to the second laser light detector, the third waveguide adapted to transmit laser light therethrough to the second laser light detector;
    an optical readout arrangement integrated into the substrate that comprises:
    (1) a first 50/50 beamsplitter comprising a slot etched in the substrate adjacent the first end of the first waveguide and disposed within the first waveguide that is oriented such that applied laser light is coupled into the first waveguide by way of its first and second ends such that laser light counterpropagates within the first waveguide;
    (2) a second 50/50 beamsplitter comprising a slot etched in the substrate adjacent the first 50/50 beamsplitter and disposed adjacent the first waveguide that is oriented such that laser light coupled along the first waveguide toward the first end thereof is reflected into the third waveguide at its first end, and such that the laser light is transmitted further along the first waveguide and reflected from the first 50/50 beamsplitter into the second waveguide at its first end;
    (3) a reflector comprising a slot etched in the substrate adjacent the first 50/50 beamsplitter and disposed within the second waveguide and oriented such that laser light coupled by way of the first beamsplitter into the second waveguide is coupled along the second waveguide to the first detector;
    (4) a third 50/50 beamsplitter comprising a slot etched in the substrate adjacent the first 50/50 beamsplitter and disposed adjacent the first waveguide near its second end and oriented such that laser light transmitted along the first waveguide toward the second end thereof is transmitted therethrough and coupled to the second waveguide by way of the first beamsplitter and reflector, and the light is reflected therefrom into the third waveguide at its first end;

(5) a fourth 50/50 beamsplitter comprising a slot etched in the substrate adjacent the third 50/50 beamsplitter and disposed adjacent the third waveguide near its first end and oriented such that laser light coupled by way of the third beamsplitter into the third waveguide is coupled along the third waveguide to the second detector, and such that laser light reflected by the second beamsplitter into the third waveguide is transmitted by the fourth beamsplitter to the second detector; and

detection means coupled to the first and second detectors for measuring the relative phase shift between the laser light detected by the first and second detectors due to rotation of the sensor.

9. The sensor of Claim 8 wherein the substrate comprises a glass-on-silicon substrate.

10. The sensor of claim 8 wherein the first and second detectors comprise PIN photodiode detectors grown on the substrate.

11. The sensor of claim 8 wherein the light source comprises a laser diode grown on the substrate.

12. The integrated optical gyro sensor of claim 8, in which the sensor is comprised of titanium diffused onto a lithium niobate substrate.

13. The integrated optical gyro sensor of claim 8, in which the sensor comprises a glass on silicon structure.

14. The integrated optical gyro sensor of claim 8, in which the first and second detectors comprise PIN photodiode detectors integrated onto the substrate.

15. The integrated optical gyro sensor of claim 8, in which the light source comprises a laser diode integrated onto the substrate.

FIG. 1.

FIG. 2.